# EUROPÄISCHE PATENTSCHRIFT

(11) **EP 3 195 382 B1**
(45) Veröffentlichungstag und Bekanntmachung des Hinweises auf die Patenterteilung: **06.06.2018**
(21) Anmeldenummer: 15748028.6
(22) Anmeldetag: 04.08.2015
(51) Int. Cl.: H01M 2/02, H01M 2/20, H01M 2/30, H01M 10/052, H01M 10/0565

(54) **ENERGIESPEICHEREINHEIT FÜR EINE HANDWERKZEUGMASCHINE**
ENERGY STORAGE UNIT FOR A HANDHELD POWER TOOL
UNITÉ D'ACCUMULATION D'ÉNERGIE POUR MACHINE-OUTIL PORTATIVE

(30) Priorität: 19.09.2014 DE 102014218877
(43) Veröffentlichungstag der Anmeldung: 26.07.2017
(73) Patentinhaber: Robert Bosch GmbH, 70442 Stuttgart (DE)
(72) Erfinder: KOENIG, Anja, 72770 Reutlingen (DE)
(86) Internationale Anmeldenummer: PCT/EP2015/067938
(87) Internationale Veröffentlichungsnummer: WO 2016/041688

(56) Entgegenhaltungen:
- JP-A- 2003 109 559
- JP-A- 2006 344 457
- JP-A- 2008 091 036
- US-A1- 2013 171 485

## Beschreibung

### Stand der Technik

Es ist bereits eine Energiespeichereinheit für eine Handwerkzeugmaschine, mit einem Gehäuse, das an einer Gehäusegrundseite einen Falz aufweist, und mit zumindest einem Anschlusselement, das dazu vorgesehen ist, ein Elektrodenpotential durch den Falz aus dem Gehäuse herauszuführen, vorgeschlagen worden (siehe z.B. JP2003-109559).

### Offenbarung der Erfindung

Die Erfindung wird im Anspruch 1 offenbart und geht aus von einer Energiespeichereinheit für eine Handwerkzeugmaschine, mit einem Gehäuse, das an einer Gehäusegrundseite einen Falz aufweist, und mit zumindest einem Anschlusselement, das dazu vorgesehen ist, ein Elektrodenpotential durch den Falz aus dem Gehäuse herauszuführen.

Es wird vorgeschlagen, dass die Energiespeichereinheit zumindest eine Kontaktstelle zu einer elektrischen Kontaktierung des zumindest einen Anschlusselements aufweist, die zumindest teilweise auf dem Falz angeordnet ist.

Durch die erfindungsgemäße Ausgestaltung der Energiespeichereinheit kann ein vorhandener Bauraum besonders vorteilhaft genutzt werden und ein geringes Gesamtvolumen einer Akkuvorrichtung für die Handwerkzeugmaschine erreicht werden. Es kann eine besonders komfortable Akkuvorrichtung bereitgestellt werden. Unter einer "Energiespeichereinheit" soll in diesem Zusammenhang insbesondere eine elektrische Energiespeichereinheit, vorzugsweise eine elektrochemische Energiespeichereinheit, bevorzugt eine wiederaufladbare Energiespeichereinheit verstanden werden, beispielsweise eine Akkumulatorzelle, insbesondere eine Lithium-Polymerzelle. Unter einer "Gehäusegrundseite" soll in diesem Zusammenhang eine Seite verstanden werden, die sich zumindest in einer Richtung entlang einer Haupterstreckungsrichtung des Gehäuses der Energiespeichereinheit erstreckt. Vorzugsweise ist die Gehäusegrundseite als eine größte Seite des Gehäuses ausgebildet und ist beispielsweise als die Grundseite eines Quaders ausgebildet, der eine Grundform des Gehäuses festlegt. Die Gehäusegrundseite legt zumindest in einem Bereich, an dem das Anschlusselement austritt, eine Gehäusegrundseitenebene fest. Unter einem "Falz" soll in diesem Zusammenhang insbesondere eine flächige, vorzugsweise streifenförmige, Form verstanden werden, die von einer Gehäusehülle des Gehäuses ausgebildet wird und dazu vorgesehen ist, ein Gehäusevolumen in einem Bereich einer Kante des Gehäuses zu verschließen. Vorzugsweise umfasst das Gehäuse ein Folienelement, das die Gehäusehülle ausbildet und das beispielsweise ein Laminat aufweist bestehend aus einer Metallfolie, wie Aluminiumfolie, und zumindest einem weiteren, elektrisch isolierenden Material, wie einem Kunststoff. Vorzugsweise kommen in einem Bereich des Falzes Wandungen verschiedener Seiten des Gehäuses miteinander in Kontakt und bilden eine Schichtstruktur aus. Unter einem "Anschlusselement" soll in diesem Zusammenhang insbesondere ein Element verstanden werden, das dazu vorgesehen ist, eine Elektrode der Energiespeichereinheit elektrisch mit der zumindest einen Kontaktstelle außerhalb des Gehäuses zu verbinden. Vorzugsweise weist das Anschlusselement räumlich zwischen der Elektrode und der zumindest einen Kontaktstelle einen Verlauf auf, der in einem Bereich, in dem das Anschlusselement austritt, parallel zu der Gehäusegrundseitenebene und bevorzugt zumindest unmittelbar benachbart zu der Gehäusegrundseitenebene und besonders bevorzugt in der Gehäusegrundseitenebene angeordnet ist. Vorzugsweise tritt das Kontaktelement an einem dem Gehäuse abgewandten Ende des Falzes aus dem Falz aus. Vorzugsweise umfasst das Anschlusselement ein Leiterstück, bevorzugt ein zumindest stückweise streifenförmiges Leiterstück, wie beispielsweise einen Metallstreifen. Unter der Wendung "auf dem Falz" soll in diesem Zusammenhang insbesondere verstanden werden, dass die Kontaktstelle zumindest unmittelbar benachbart zu einer Oberfläche des Falzes angeordnet ist und/oder vorzugsweise zumindest ein Element, das die Kontaktstelle ausbildet, mit dem Falz in Kontakt ist.

In einer vorteilhaften Ausgestaltung ist die zumindest eine Kontaktstelle flächig ausgebildet. Dadurch können für die Energiespeichereinheit unbedenkliche Fügeverfahren zu einer Kontaktierung eingesetzt werden, wodurch Beschädigungen der Energiespeichereinheit vermieden, eine Einsatzdauer erhöht und Ausschussraten verringert werden können. Es können mechanisch besonders robuste Kontaktstellen erreicht werden. Unter "flächig" soll in diesem Zusammenhang insbesondere verstanden werden, dass die Elemente, welche die Kontaktstelle ausbilden, jeweils eine Fläche zur Kontaktierung aufweisen und die Elemente über eine Fläche von zumindest 3 Quadratmillimeter, vorzugsweise 5 Quadratmillimeter und besonders bevorzugt zumindest 7 Quadratmillimeter miteinander in Kontakt sind.

Ferner wird vorgeschlagen, dass die zumindest eine Kontaktstelle als eine Schweißkontaktstelle ausgebildet ist. Dadurch kann bei der Kontaktierung eine schädigende Wärmeeinwirkung auf die Energiespeichereinheit, wie sie beispielsweise bei einem Lötprozess auftreten kann, vermieden werden. Eine Fehleranfälligkeit des Fügeverfahrens kann gering gehalten werden. Eine Robustheit der Kontaktstellen kann weiter erhöht werden, wodurch eine hohe Einsatzdauer der Energiespeichereinheit erreicht werden kann. Vorzugsweise werden Elemente, welche die Kontaktstelle ausbilden, in einem Bereich der Kontaktaktstelle mittels Widerstandschweißen miteinander verbunden.

In vorteilhafter Weise erstreckt sich die zumindest eine Kontaktstelle in einer Ebene parallel zu der Gehäusegrundseite. Dadurch kann ein besonders einfacher Kontaktierungsschritt erreicht werden. Taktzeiten zur Kontaktierung können verkürzt werden.

Ferner wird vorgeschlagen, dass die Kontaktstelle auf einer Seite des Falzes angeordnet ist, die von der Gehäusegrundseite abgewandt ist. Dadurch kann die Kontaktstelle vorteilhaft in einem sonst ungenutzten Raum angeordnet werden. Ein vorhandener Bauraum kann besonders vorteilhaft genutzt werden. Vorzugsweise weist das Gehäuse eine der Gehäusegrundseite gegenüberliegende Gehäusedeckseite auf und die Kontaktstelle ist räumlich zwischen der Gehäusegrundseitenebene und einer Ebene der Gehäusedeckseite angeordnet.

In der vorliegenden Erfindung weist die Energiespeichereinheit zumindest ein mit dem zumindest einen Anschlusselement fest verbundenes Kontaktelement auf, das die zumindest eine Kontaktstelle ausbildet. Dadurch kann auf besonders einfache Weise die Kontaktstelle auf dem Falz angeordnet werden. Unter einem "Kontaktelement" soll in diesem Zusammenhang insbesondere ein Element verstanden werden, das zumindest elektrisch zwischen dem Anschlusselement und der Kontaktstelle angeordnet ist. Das Kontaktelement bildet mit dem Anschlusselement eine weitere Kontaktstelle aus. Das Kontaktelement und das Anschlusselement sind an der weiteren Kontaktstelle stoffschlüssig miteinander verbunden, d.h. beispielsweise verschweißt oder verlötet. Es ist auch denkbar, dass das Kontaktelement und das Anschlusselement an der weiteren Kontaktstelle auf eine andere dem Fachmann sinnvoll erscheinende Weise miteinander verbunden und beispielsweise miteinander verpresst sind und/oder eine kraftschlüssige Verbindung ausbilden.

Ferner wird vorgeschlagen, dass das Gehäuse ein Gehäuseelement aufweist, das zumindest im Bereich der zumindest einen Kontaktstelle räumlich zwischen dem zumindest einen Anschlusselement und dem zumindest einen Kontaktelement angeordnet ist. Dadurch kann die Kontaktstelle besonders einfach gelagert werden. Sie kann wirkungsvoll gegen äußere Einflüsse, wie leitende Partikel und/oder mechanische Beanspruchung geschützt werden. Unter "räumlich zwischen" soll in diesem Zusammenhang insbesondere verstanden werden, dass das Kontaktelement und das durch den Falz geführte Anschlusselement das Gehäuseelement zwischen sich einschließen. Vorzugsweise bildet das Folienelement das Gehäuseelement aus.

Ferner wird vorgeschlagen, dass die Energiespeichereinheit eine für das zumindest eine Anschlusselement vorgesehene Austrittsebene aufweist, auf die bezogen die zumindest eine Kontaktstelle und das Gehäuseelement auf einer gleichen Seite angeordnet sind. Dadurch kann eine besonders kompakte Anordnung der Kontaktstelle erreicht werden. Unter einer "Austrittsebene" soll in diesem Zusammenhang insbesondere eine Ebene verstanden werden, die zumindest im Wesentlichen senkrecht zu einem Verlauf des Anschlusselements und in einem Bereich angeordnet ist, in dem das Anschlusselement aus dem Falz austritt. Vorzugsweise ist die Austrittsebene senkrecht zu der Gehäusegrundseite an einer Falzkante angeordnet, die von dem Gehäuse abgewandt ist.

In einer vorteilhaften Ausgestaltung weisen das zumindest eine Kontaktelement und das zumindest eine Anschlusselement zueinander zumindest im Wesentlichen entgegengesetzt orientierte Haupterstreckungsrichtungen auf. Dadurch kann eine besonders kompakte Anordnung der Kontaktstelle erreicht werden. Unter einer "Orientierung" der Haupterstreckungsrichtung soll in diesem Zusammenhang eine Stromflussrichtung in einem Betriebszustand der Energiespeichereinheit verstanden werden, d.h. in einem Betriebszustand ist die Stromflussrichtung in dem zumindest einen Kontaktelement der Stromflussrichtung in dem zumindest einen Anschlusselement räumlich entgegengesetzt gerichtet. Vorzugsweise sind die Orientierungen zumindest im Wesentlichen antiparallel zueinander ausgerichtet.

Ferner wird eine Akkuvorrichtung für eine Handwerkzeugmaschine vorgeschlagen, mit zumindest zwei Energiespeichereinheiten, die jeweils ein Gehäuse umfassen, das an einer Gehäusegrundseite einen Falz aufweist, sowie jeweils zumindest ein Anschlusselement, das dazu vorgesehen ist, ein Elektrodenpotential durch den Falz aus dem Gehäuse herauszuführen, sowie jeweils zumindest eine Kontaktstelle zu einer elektrischen Kontaktierung des zumindest einen Anschlusselements, die zumindest teilweise auf dem Falz angeordnet ist. Dadurch kann eine besonders kompakte und langlebige Akkuvorrichtung bereitgestellt werden. Es kann ein hoher Benutzerkomfort erreicht werden.

In einer vorteilhaften Ausgestaltung weist die Akkuvorrichtung zumindest zwei Leiterelemente auf zur elektrischen Verbindung mit einer Kontaktstelle von zumindest einem Kontaktelement einer der Energiespeichereinheiten. Dadurch kann besonders einfach eine elektrische Verbindung der Kontaktstelle erreicht werden. Eine Kontaktplatte und/oder Halteplatte zu einer Kontaktierung der Anschlusselemente kann eingespart werden. Unter einem "Leiterelement" soll in diesem Zusammenhang insbesondere ein langgestrecktes Element zu einer Stromführung verstanden werden, wie beispielsweise ein Kabel, das dazu vorgesehen ist, eine Strecke von den Kontaktstellen der Energiespeichereinheiten zu einem Zellableiterelement der Akkuvorrichtung zu überbrücken. Vorzugsweise liegen die Leiterelemente in einem montierten Zustand zumindest abschnittsweise auf dem Falz auf.

In vorteilhafter Weise sind die zumindest zwei Leiterelemente jeweils genau einer der Energiespeichereinheiten zugeordnet und lediglich mit der Kontaktstelle der zugeordneten Energiespeichereinheit elektrisch verbunden. Dadurch kann besonders einfach eine Kontaktierung der Energiespeichereinheiten erreicht werden.

Ferner wird vorgeschlagen, dass zumindest eines der Leiterelemente die Energiespeichereinheiten elektrisch miteinander verbindet. Dadurch kann besonders einfach und kompakt eine Reihenschaltung der Energiespeichereinheiten erreicht werden. Es kann besonders einfach eine Akkuvorrichtung mit einer großen Speicherkapazität bereitgestellt werden.

In einer vorteilhaften Ausgestaltung bilden die Falze der zumindest zwei Energiespeichereinheiten zueinander parallele Kanten aus, die parallel zu den zumindest zwei Leiterelementen angeordnet sind. Dadurch können die Leiterelemente besonders kurz ausgebildet werden und es kann eine besonders effiziente Anordnung der Energiespeichereinheiten erreicht werden. Vorzugsweise sind die Kanten der Falze fluchtend zueinander angeordnet.

Die erfindungsgemäße Energiespeichereinheit soll hierbei nicht auf die oben beschriebene Anwendung und Ausführungsform beschränkt sein. Insbesondere kann die erfindungsgemäße Energiespeichereinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Explosionszeichnung einer Akkuvorrichtung mit einer erfindungsgemäßen Energiespeichereinheit,
- Fig. 2: eine perspektivische Ansicht der Energiespeichereinheit in einem Ausgangszustand für eine Montage,
- Fig. 3: die Energiespeichereinheit mit Kontaktelementen und Leiterelementen und
- Fig. 4: ein weiteres Ausführungsbeispiel mit einer alternativen Kontaktierung von Energiespeichereinheiten.

### Beschreibung der Ausführungsbeispiele

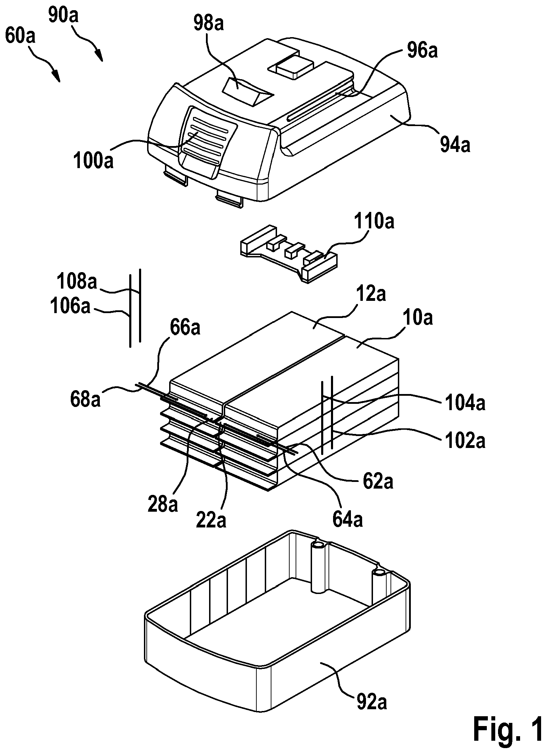

Figur 1 zeigt schematisch den Aufbau einer Akkuvorrichtung 60a für eine Handwerkzeugmaschine. Die Akkuvorrichtung 60a ist für eine Energieversorgung einer Handwerkzeugmaschine vorgesehen. Es ist denkbar, dass die Akkuvorrichtung 60a für die Energieversorgung einer anderen elektrischen Maschine vorgesehen ist. Die Akkuvorrichtung 60a weist eine Mehrzahl von Energiespeichereinheiten 10a, 12a auf.

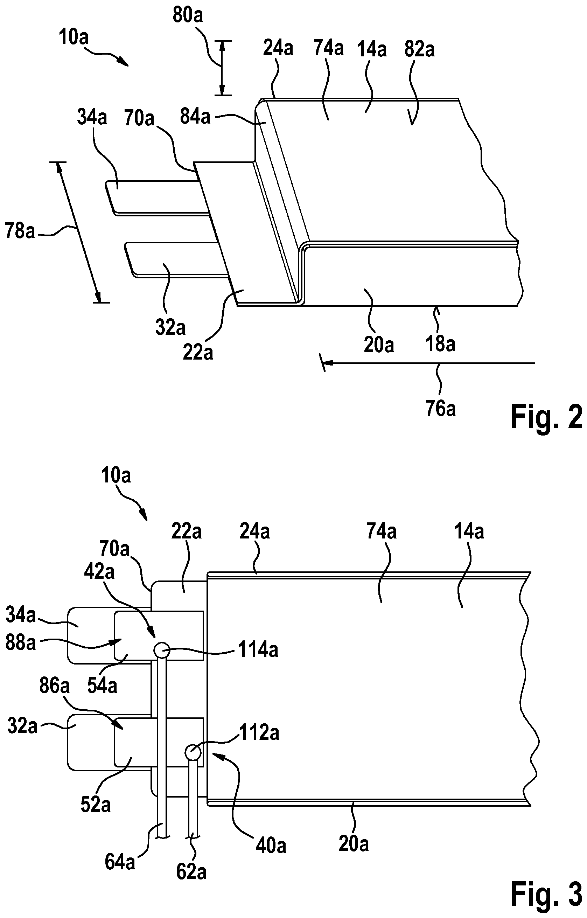

Figuren 2 und 3 zeigen eine Energiespeichereinheit 10a der Akkuvorrichtung 60a. Die Energiespeichereinheiten 10a, 12a der Akkuvorrichtung 60a sind analog zueinander ausgebildet, weswegen im Folgenden stellvertretend lediglich eine der Energiespeichereinheiten 10a näher beschrieben wird. Die Energiespeichereinheit 10a ist dazu vorgesehen, elektrische Energie in einem Ladevorgang aufzunehmen, die Energie zu speichern und bei Bedarf in einem Betriebszustand der Handwerkzeugmaschine abzugeben. In dem vorliegenden Ausführungsbeispiel ist die Energiespeichereinheit 10a als eine Lithium-Polymerzelle ausgebildet und weist eine Nennspannung von 3,6 Volt auf.

Die Energiespeichereinheit 10a weist ein Gehäuse 14a mit einer ebenen, rechteckigen Gehäusegrundseite 18a auf. Das Energiespeichereinheit 10a weist einen quaderförmigen Grundkörper 74a mit einer Länge 76a, einer Breite 78a und einer Höhe 80a auf. Das Gehäuse 14a weist eine der Gehäusegrundseite 18a gegenüberliegende Gehäusedeckseite 82a auf, die parallel zu der Gehäusegrundseite 18a angeordnet ist. Es ist denkbar, dass der Grundkörper 74a eine andere dem Fachmann sinnvoll erscheinende Grundform aufweist und die Gehäusegrundseite 18a beispielsweise dreieckig oder trapezförmig ausgebildet ist. Die Höhe 80a ist in einer Richtung senkrecht zu der Gehäusegrundseite 18a angeordnet. Die Breite 78a und die Länge 76a sind parallel zu einer Ebene der Gehäusegrundseite 18a angeordnet. In dem vorliegenden Ausführungsbeispiel ist die Länge 76a größer als die Breite 78a und die Breite 78a größer als die Höhe 80a. Der Grundkörper 74a weist zwei Stirnseiten 84a auf, die jeweils durch Kanten in Richtung der Höhe 80a und der Breite 78a des Gehäuses 14a begrenzt werden und von denen eine in der Figur 2 sichtbar ist. Der Grundkörper 74a weist zwei Längsseiten auf, die jeweils durch Kanten in Richtung der Länge 76a und der Höhe 80a des Gehäuses 14a begrenzt werden.

Das Gehäuse 14a umfasst ein Folienelement, das eine Gehäusehülle ausbildet und das in dem vorliegenden Ausführungsbeispiel als ein Laminat aus einer kunststoffbeschichteten Aluminiumfolie ausgebildet ist. Es ist denkbar, dass das Folienelement von einem anderen geeigneten Material ausgebildet ist. Der Grundkörper 74a weist vier Grundseitenkanten an der Gehäusegrundseite 18a auf. An drei der Grundseitenkanten läuft die Gehäusehülle jeweils in einem Falz 20a, 22a, 24a aus, d.h. das Gehäuse 14a weist drei Falze 20a, 22a, 24a auf. Es ist denkbar, dass das Gehäuse 14a vier Falze aufweist. Es ist ebenso denkbar, dass das Gehäuse 14a eine andere Grundform, beispielsweise eine nicht-eckige Grundform und entsprechend weniger Falze aufweist. Bevorzugt weist das Gehäuse 14a zumindest einen Falz 22a auf.

Die Energiespeichereinheit 10a umfasst zwei elektrische Anschlusselemente 32a, 34a, die an der Gehäusegrundseite 18a austreten. Die Anschlusselemente 32a, 34a sind als Blechstreifen ausgebildet und weisen einen Streifenverlauf auf. Die Anschlusselemente 32a, 34a treten an einer Grundseitenkante, die an einer ersten der beiden Stirnseiten 84a des Grundkörpers 74a angeordnet ist, an einem ersten der Falze 22a aus. Der Falz 22a an dem die Anschlusselemente 32a, 34a austreten, weist eine Schichtstruktur auf. In Bereichen des ersten Falzes 22a, wo die Anschlusselemente 32a, 34a durch den Falz 22a hindurchgeführt sind, weist die Schichtstruktur zumindest jeweils eine Lage des Folienelements, einen Blechstreifen des jeweiligen Anschlusselements 32a, 34a und eine weitere Lage der Folienelements auf. Der Falz 22a weist an einem von dem Grundkörper 74a der Energiespeichereinheit 10a abgewandten Ende eine Falzkante 70a auf.

Die Energiespeichereinheit 10a umfasst zumindest zwei Elektroden, von denen je eine in einem Innern des Gehäuses 14a mit je einem Anschlusselement 32a, 34a elektrisch verbunden ist. Die Anschlusselemente 32a, 34a sind dazu vorgesehen, ein Elektrodenpotential durch den Falz 22a aus dem Gehäuse 14a herauszuführen. Der Streifenverlauf ist in einem Innern des Gehäuses 14a in einem Bereich der Grundseitenkante, an der die Anschlusselemente 32a, 34a austreten, parallel zu der Gehäusegrundseite 18a angeordnet. Die Anschlusselemente 32a, 34a sind zu einer elektrischen Kontaktierung der Energiespeichereinheit 10a vorgesehen und weisen unterschiedliche elektrische Polungen auf. Ein erstes der Anschlusselemente 32a weist in einem geladenen Zustand der Energiespeichereinheit 10a eine positive Polung auf. Ein weiteres der Anschlusselemente 34a weist in dem geladenen Zustand eine negative Polung auf. In einem Betriebszustand fließt über die Anschlusselemente 32a, 34a Energie aus der Energiespeichereinheit 10a ab.

Die Energiespeichereinheit 10a umfasst zwei Kontaktstellen 40a, 42a zu einer elektrischen Kontaktierung der Anschlusselemente 32a, 34a. Die Kontaktstellen 40a, 42a sind in dem vorliegenden Ausführungsbeispiel zu einer mittelbaren Kontaktierung der Anschlusselemente 32a, 34a vorgesehen. Die Kontaktstellen 40a, 42a sind auf dem Falz 22a angeordnet, an dem die Anschlusselemente 32a, 34a aus dem Gehäuse 14a der Energiespeichereinheit 10a austreten. Die Kontaktstellen 40a, 42a sind flächig ausgebildet und weisen jeweils eine Kontaktfläche von etwa einem Quadratmillimeter auf. In dem vorliegenden Ausführungsbeispiel sind die Kontaktflächen zumindest im Wesentlichen kreisförmig ausgebildet. Es ist ebenso denkbar, dass die Kontaktflächen eine andere Form aufweisen. Die Kontaktstellen 40a, 42a sind in einer Ebene parallel zu der Gehäusegrundseite 18a angeordnet. Der erste Falz 22a weist zwei Seiten auf. Eine erste der Seiten setzt die Gehäusegrundseite 18a in Richtung der Anschlusselemente 32a, 34a fort. Eine weitere der Seiten ist der ersten Seite gegenüberliegend angeordnet und von der Gehäusegrundseite 18a abgewandt. Die Kontaktstellen 40a, 42a sind auf der weiteren, der Gehäusegrundseite 18a abgewandten Seite des Falzes 22a angeordnet. Die Kontaktstellen 40a, 42a sind innerhalb eines Querschnitts der Energiespeichereinheit 10a parallel zu den Stirnseiten 84a des Gehäuses 14a angeordnet. Die Kontaktstellen 40a, 42a sind als Schweißkontaktstellen ausgebildet und in dem vorliegenden Ausführungsbeispiel durch Widerstandsschweißen hergestellt.

Die Energiespeichereinheit 10a weist zwei Kontaktelemente 52a, 54a auf. Jeweils eines der Kontaktelemente 52a, 54a ist fest mit jeweils einem der Anschlusselemente 32a, 34a verbunden. Die Kontaktelemente 52a, 54a bilden die Kontaktstellen 40a, 42a aus. Die Kontaktelemente 52a, 54a sind in dem vorliegenden Ausführungsbeispiel flächig und als Metallplättchen ausgebildet. Die Energiespeichereinheit 10a weist zwei weitere Kontaktstellen 86a, 88a auf. An den weiteren Kontaktstellen 86a, 88a sind die Anschlusselemente 32a, 34a und die Kontaktelemente 52a, 54a fest miteinander verbunden. In dem vorliegenden Ausführungsbeispiel sind jeweils ein Anschlusselement 32a, 34a und jeweils ein Kontaktelement 52a, 54a stoffschlüssig miteinander verbunden und miteinander verschweißt. Es ist auch denkbar, dass die Anschlusselemente 32a, 34a und die Kontaktelemente 52a, 54a auf eine andere Art fest miteinander verbunden sind, beispielsweise durch Verpressen.

Die Energiespeichereinheit 10a weist ein Gehäuseelement auf, das zumindest im Bereich der Kontaktstellen 86a, 88a räumlich jeweils zwischen einem der Anschlusselemente 32a, 34a und dem zugeordneten Kontaktelement 52a, 54a angeordnet ist. In dem vorliegenden Ausführungsbeispiel ist das Gehäuseelement einstückig mit dem Folienelement des ersten Falzes 22a ausgebildet. Die Energiespeichereinheit 10a weist ferner eine für die Anschlusselemente 32a, 34a vorgesehene Austrittsebene auf, auf die bezogen die Kontaktstellen 86a, 88a und das Gehäuseelement auf einer gleichen Seite angeordnet sind. Die Austrittsebene ist senkrecht zu der Gehäusegrundseite 18a und der Gehäusedeckseite 82a an der Falzkante 70a parallel zu der Falzkante 70a angeordnet. Die weiteren Kontaktstellen 86a, 88a und die Kontaktstellen 40a, 42a sind auf verschiedenen Seiten der Austrittsebene angeordnet. Die Anschlusselemente 32a, 34a und die Kontaktelemente 52a, 54a durchdringen die Austrittsebene.

Die Kontaktelemente 52a, 54a und die jeweils den Kontaktelementen 52a, 54a zugeordneten Anschlusselemente 32a, 34a weisen zueinander zumindest im Wesentlichen entgegengesetzt orientierte Haupterstreckungsrichtungen auf. Die Anschlusselemente 32a, 34a und die Kontaktelemente 52a, 54a werden in einem Betriebszustand, in dem die Energiespeichereinheit 10a Energie an einen Verbraucher abgibt, in der Haupterstreckungsrichtung von einem Strom durchflossen, d.h. die Haupterstreckungsrichtung entspricht einer Stromflussrichtung in dem Betriebszustand. Die Kontaktelemente 52a, 54a einerseits und die jeweils den Kontaktelementen 52a, 54a zugeordneten Anschlusselemente 32a, 34a andererseits durchdringen die Austrittsebene in zueinander entgegengesetzten Richtungen.

Die Energiespeichereinheiten 10a sind in dem vorliegenden Ausführungsbeispiel schichtenweise angeordnet (Figur 1). Eine Schicht weist jeweils zwei Energiespeichereinheiten 10a, 12a auf. Es ist denkbar, dass die Schicht eine größere Zahl von Energiespeichereinheiten 10a, 12a aufweist oder nur aus einer Energiespeichereinheit 10a besteht. Jeweils eine der Längsseiten des Grundkörpers 74a einer Energiespeichereinheit 10a ist einer der Längsseiten des Grundkörpers einer benachbarten Energiespeichereinheit 12a der Schicht zugewandt. Die Stirnseiten 84a und die Gehäusegrundseiten 18a der Energiespeichereinheiten 10a, 12a der Schicht liegen jeweils in einer gemeinsamen Ebene. Die Stirnseitenkanten der Energiespeichereinheiten 10a, 12a einer Schicht, an denen die Anschlusselemente 32a, 34a austreten, sind auf einer gleichen Seite der Schicht angeordnet.

Die Akkuvorrichtung 60a weist mehrere Schichten von Energiespeichereinheiten 10a, 12a auf. Die Gehäusedeckseiten 82a und die Gehäusegrundseiten 18a der Energiespeichereinheiten benachbarter Schichten sind einander zugewandt. Die Akkuvorrichtung 60a umfasst ein formstabiles Gehäuse 90a, das dazu vorgesehen ist, die Energiespeichereinheiten 10a, 12a zu lagern und die Akkuvorrichtung 60a mit der nicht näher dargestellten Handwerkzeugmaschine zu koppeln. In dem vorliegenden Ausführungsbeispiel ist die Akkuvorrichtung 60a dazu vorgesehen, in eine entsprechende Aufnahme der Handwerkzeugmaschine eingesteckt zu werden und sie weist eine Einsteckrichtung auf. Das Gehäuse 90a ist im Wesentlichen aus Kunststoff ausgebildet und umfasst ein Bodenelement 92a und ein Deckelelement 94a. Das Gehäuse 90a weist eine quaderförmige Grundform auf. Das Deckelelement 94a ist an einer Oberseite stufenförmig ausgebildet. In dem vorliegenden Ausführungsbeispiel weist das Gehäuse 90a an einem Stufenübergang zwei Führungselemente 96a auf, die jeweils als eine Nut in Einsteckrichtung ausgebildet sind. Das Gehäuse 90a umfasst ferner ein Verriegelungselement 98a zu einer Verriegelung mit der Handwerkzeugmaschine. Das Verriegelungselement 98a ist als ein Rastelement ausgebildet, das in einer Verriegelungsposition über eine Oberfläche des Deckelelements 94a hinausragt. Die Akkuvorrichtung 60a weist ein Bedienelement 100a zur Entriegelung des Verriegelungselements 98a auf.

Die Akkuvorrichtung 60a weist in dem vorliegenden Ausführungsbeispiel je Energiespeichereinheit 10a, 12a zwei Leiterelemente 62a, 64a, 66a, 68a auf zur elektrischen Verbindung mit den Kontaktstellen 40a, 42a der Kontaktelemente 52a, 54a der Energiespeichereinheit 10a, 12a. Die Leiterelemente 62a, 64a, 66a, 68a sind dazu vorgesehen, einen Strom von den Kontaktstellen 40a, 42a zu Zellableiterelementen 102a, 104a, 106a, 108a zu führen, die ihrerseits mit einer Kontakteinheit 110a verbunden sind. Die Leiterelemente 62a, 64a, 66a, 68a sind langestreckt ausgebildet und weisen an einem Ende jeweils einen Kopf 112a, 114a auf, der zu einer Kontaktierung an der Kontaktstelle 40a, 42a vorgesehen ist (Figur 3). Je ein Leiterelement 62a, 64a, 66a, 68a und ein Kontaktelement 52a, 54a sind an je einer Kontaktstelle 40a, 42a fest miteinander verbunden. In dem vorliegenden Ausführungsbeispiel sind an den Kontaktstellen 40a, 42a je ein Leiterelement 62a, 64a, 66a, 68a und je ein Kontaktelement 52a, 54a stoffschlüssig miteinander verbunden. Die Leiterelemente 62a, 64a, 66a, 68a und die Kontaktelemente 52a, 54a sind durch Widerstandsschweißen miteinander verschweißt.

In dem vorliegenden Ausführungsbeispiel sind je zwei Leiterelemente 62a, 64a, 66a, 68a jeweils genau einer der Energiespeichereinheiten 10a, 12a zugeordnet und lediglich mit einer der Kontaktstellen 40a, 42a der zugeordneten Energiespeichereinheit 10a, 12a elektrisch verbunden. Die jeweils ersten Falze 22a, 28a von nebeneinander angeordneten Energiespeichereinheiten 10a, 12a bilden zueinander parallel angeordnete Falzkanten 70a aus, die parallel zu den Leiterelementen 62a, 64a, 66a, 68a angeordnet sind, die den Energiespeichereinheiten 10a, 12a zugeordnet sind. Die Leiterelemente 62a, 64a, 66a, 68a verlaufen ausgehend von der jeweiligen Kontaktierungsstelle parallel zu der Grundseitenkante, an der die Anschlusselemente 32a, 34a austreten, auf dem jeweils ersten Falz 22a, 28a. Die Leiterelemente 62a, 64a, 66a, 68a liegen auf dem jeweils ersten Falz 22a, 28a auf. Die einer Energiespeichereinheit 10a, 12a zugeordneten Leiterelemente 62a, 64a, 66a, 68a verlaufen ausgehend von der jeweiligen Kontaktierungsstelle bezogen auf eine Richtung senkrecht zu der Gehäusegrundseite 18a räumlich zwischen der Gehäusegrundseite 18a und der Gehäusedeckseite 82a.

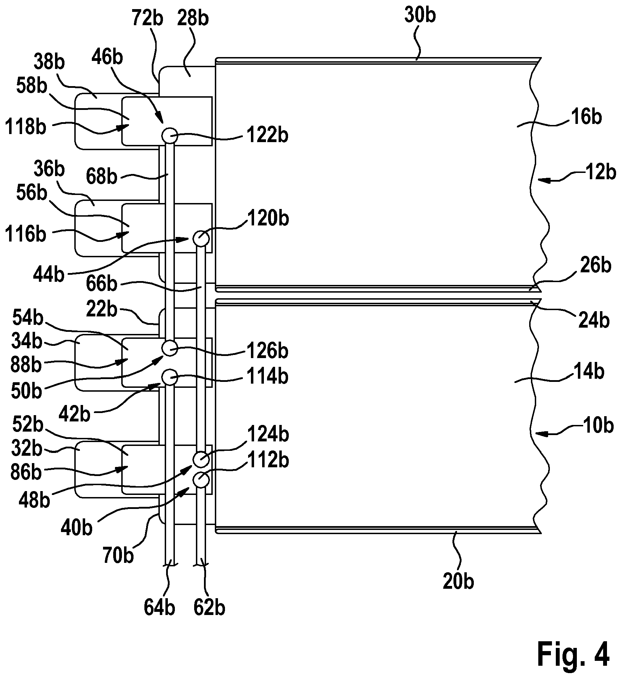

In Figur 4 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figuren 4 ist der Buchstabe a durch den Buchstaben b ersetzt.

Die Figur 4 zeigt zwei Energiespeichereinheiten 10b, 12b einer Handwerkzeugmaschine. Die Energiespeichereinheiten 10b, 12b weisen analog zu dem vorangehenden Ausführungsbeispiel jeweils ein Gehäuse 14b, 16b mit einer ebenen, rechteckigen Gehäusegrundseite auf. Die Energiespeichereinheiten 10b, 12b weisen jeweils einen quaderförmigen Grundkörper mit einer Länge, einer Breite und einer Höhe auf. Die Gehäuse 14b, 16b weisen jeweils eine der Gehäusegrundseite gegenüberliegende Gehäusedeckseite auf, die parallel zu der Gehäusegrundseite angeordnet ist. Die Grundkörper weisen jeweils zwei Stirnseiten auf, die jeweils durch Kanten in Richtung der Höhe und der Breite der Gehäuse 14b, 16b begrenzt werden. Die Grundkörper weisen jeweils zwei Längsseiten auf, die jeweils durch Kanten in Richtung der Länge und der Höhe des Gehäuses 14b, 16b begrenzt werden.

Die Gehäuse umfassen jeweils ein Folienelement, das eine Gehäusehülle ausbildet. Die Grundkörper weisen jeweils vier Grundseitenkanten an den Gehäusegrundseiten auf. An drei der Grundseitenkanten läuft die Gehäusehülle jeweils in einem Falz 20b-30b aus, d.h. die Gehäuse weisen jeweils drei Falze 20b-30b auf.

Die Energiespeichereinheiten 10b, 12b umfassen jeweils zwei elektrische Anschlusselemente 32b, 34b, 36b, 38b, die an den Gehäusegrundseiten austreten. Die Anschlusselemente 32b, 34b, 36b, 38b sind als Blechstreifen ausgebildet und weisen einen Streifenverlauf auf. Die Anschlusselemente 32b, 34b, 36b, 38b treten an einer Grundseitenkante, die an einer ersten der beiden Stirnseiten des Grundkörpers angeordnet ist, an einem jeweils ersten der Falze 22b, 28b aus. Die ersten Falze 22b, 28b weisen jeweils an einem von dem Grundkörper der Energiespeichereinheiten 10b, 12b abgewandten Ende eine Falzkante 70b, 72b auf.

Die Energiespeichereinheiten 10b, 12b umfassen jeweils zwei analog zu dem vorangehenden Ausführungsbeispiel ausgebildete und angeordnete Kontaktstellen 40b, 42b, 44b, 46b zu einer elektrischen Kontaktierung der Anschlusselemente 32b, 34b, 36b, 38b. Die Kontaktstellen 40b, 42b, 44b, 46b sind jeweils auf dem Falz 22b, 28b angeordnet, an dem die Anschlusselemente 32b, 34b, 36b, 38b aus dem Gehäuse 14b, 16b der jeweiligen Energiespeichereinheit 10b, 12b austreten. Im Unterschied zu dem vorangehenden Ausführungsbeispiel weist eine erste der Energiespeichereinheiten zwei weitere auf dem Falz 22b angeordnete Kontaktstellen 48b, 50b auf.

Die Energiespeichereinheiten weisen jeweils zwei analog zu dem vorangehenden Ausführungsbeispiel ausgebildete und angeordnete Kontaktelemente 52b, 54b, 56b, 58b auf. Jeweils eines der Kontaktelemente 52b, 54b, 56b, 58b ist fest mit jeweils einem der Anschlusselemente 32b, 34b, 36b, 38b verbunden. Die Kontaktelemente 52b, 54b, 56b, 58b bilden die Kontaktstellen 40b-50b aus. Die Kontaktelemente 52b, 54b, 56b, 58b sind analog zu dem vorangehenden Ausführungsbeispiel flächig und als Metallplättchen ausgebildet. Die Energiespeichereinheiten weisen jeweils zwei weitere Kontaktstellen 86b, 88b, 116b, 118b auf. An den weiteren Kontaktstellen 86b, 88b, 116b, 118b sind die Anschlusselemente 32b, 34b, 36b, 38b und die Kontaktelemente 52b, 54b, 56b, 58b fest miteinander verbunden.

Die Kontaktelemente 52b, 54b, 56b, 58b und die jeweils den Kontaktelementen 52b, 54b, 56b, 58b zugeordneten Anschlusselemente 32b, 34b, 36b, 38b weisen analog zu dem vorangehenden Ausführungsbeispiel zueinander zumindest im Wesentlichen entgegengesetzt orientierte Haupterstreckungsrichtungen auf.

Die Energiespeichereinheiten 10b, 12b, sind analog zu dem vorangehenden Ausführungsbeispiel für eine nicht näher dargestellte Akkuvorrichtung vorgesehen. Die Energiespeichereinheiten 10b, 12b sind schichtenweise angeordnet. Eine Schicht weist jeweils zwei Energiespeichereinheiten 10b, 12b auf, die ein Paar von einander zugeordneten Energiespeichereinheiten 10b, 12b bilden. Jeweils eine der Längsseiten des Grundkörpers einer Energiespeichereinheit 10b ist einer der Längsseiten des Grundkörpers einer benachbarten Energiespeichereinheit 12b der Schicht zugewandt. Die Stirnseiten und die Gehäusegrundseiten der Energiespeichereinheiten 10b, 12b der Schicht liegen jeweils in einer gemeinsamen Ebene. Die Stirnseitenkanten der Energiespeichereinheiten 10b, 12b der Schicht, an denen die Anschlusselemente 32b, 34b, 36b, 38b austreten, sind auf einer gleichen Seite der Schicht angeordnet.

Die Akkuvorrichtung weist im Unterschied zu dem vorangehenden Ausführungsbeispiel für jedes Paar von Energiespeichereinheiten 10b, 12b zwei Leiterelemente 66b, 68b auf, die in einem montierten Zustand die Energiespeichereinheiten 10b, 12b des Paares elektrisch miteinander verbinden. Die Leiterelemente 66b, 68b verbinden jeweils Anschlusselemente 32b, 34b, 36b, 38b, die eine gleiche Polung aufweisen. Die Akkuvorrichtung weist zwei weitere Leiterelemente 62b, 64b auf, die das Paar mit nicht näher dargestellten Zellableiterelementen elektrisch verbinden. Vier der Kontaktstellen 44b, 46b, 48b, 50b sind für eine elektrische Verbindung der Energiespeichereinheiten 10b, 12b untereinander vorgesehen. An den Kontaktstellen 40b, 42b, 44b, 46b, 48b, 50b sind die zugeordneten Leiterelemente 66b, 68b jeweils fest mit den Kontaktelementen 52b, 54b, 56b, 58b verbunden. Die Leiterelemente 62b, 64b, 66b, 68b weisen zur Kontaktierung endständige Köpfe 112b, 114b, 120b, 122b, 124b, 126b auf. Zwei der Kontaktstellen 40b, 42b sind für eine elektrische Verbindung der ersten Energiespeichereinheit 10b mit nicht näher dargestellten Zellableiterelementen verbunden. Es ist denkbar, dass mittels der Kontaktstellen 40b-50b und der Leiterelemente 62b, 64b 66b, 68b alternative dem Fachmann je nach Anwendungsfall sinnvoll erscheinende Schaltungsanordnungen geschaffen werden.

## Patentansprüche

1. Energiespeichereinheit für eine Handwerkzeugmaschine, mit einem Gehäuse (14a; 14b, 16b), das an einer Gehäusegrundseite (18a) einen Falz (22a, 28a; 22b, 28b) aufweist, mit zumindest einem Anschlusselement (32a, 34a; 32b, 34b, 36b, 38b), das dazu vorgesehen ist, ein Elektrodenpotential durch den Falz (22a, 28a; 22b, 28b) aus dem Gehäuse (14a; 14b, 16b) herauszuführen, mit zumindest einer Kontaktstelle (40a, 42a; 40b-50b) zu einer elektrischen Kontaktierung des zumindest einen Anschlusselements (32a, 34a; 32b, 34b, 36b, 38b) und mit zumindest einem mit dem zumindest einen Anschlusselement (32a, 34a; 32b, 34b, 36b, 38b) fest verbundenen Kontaktelement (52a, 54a; 52b, 54b, 56b, 58b), das die zumindest eine Kontaktstelle (40a, 42a; 40b-50b) ausbildet, wobei das Kontaktelement (52a, 54a; 52b, 54b, 56b, 58b) zumindest elektrisch zwischen dem Anschlusselement (32a, 34a; 32b, 34b, 36b, 38b) und der Kontaktstelle (40a, 42a; 40b-50b) angeordnet ist, wobei das Kontaktelement (52a, 54a; 52b, 54b, 56b, 58b) mit dem Anschlusselement (32a, 34a; 32b, 34b, 36b, 38b) eine weitere Kontaktstelle (86a, 88a; 86b, 88b, 116b, 118b) ausbildet,
**dadurch gekennzeichnet, dass**
die Kontaktstelle (40a, 42a; 40b-50b) zumindest teilweise auf dem Falz (22a, 28a; 22b, 28b) angeordnet ist, wobei das Kontaktelement (52a, 54a; 52b, 54b, 56b, 58b) und das Anschlusselement (32a, 34a; 32b, 34b, 36b, 38b) an der weiteren Kontaktstelle (86a, 88a; 86b, 88b, 116b, 118b) stoffschlüssig miteinander verbunden sind.

2. Energiespeichereinheit nach Anspruch 1
**dadurch gekennzeichnet, dass**
die zumindest eine Kontaktstelle (40a, 42a; 40b-50b) flächig ausgebildet ist.

3. Energiespeichereinheit nach Anspruch 1 oder 2,
**dadurch gekennzeichnet, dass**
die zumindest eine Kontaktstelle (40a, 42a; 40b-50b) als eine Schweißkontaktstelle ausgebildet ist.

4. Energiespeichereinheit nach einem der vorhergehenden Ansprüche,
**dadurch gekennzeichnet, dass**
sich die zumindest eine Kontaktstelle (40a, 42a; 40b-50b) in einer Ebene parallel zu der Gehäusegrundseite (18a) erstreckt.

5. Energiespeichereinheit nach einem der vorhergehenden Ansprüche
**dadurch gekennzeichnet, dass**
die Kontaktstelle (40a, 42a; 40b-50b) auf einer Seite des Falzes (22a, 28a; 22b, 28b) angeordnet ist, die von der Gehäusegrundseite (18a) abgewandt ist.

6. Energiespeichereinheit nach einem der vorhergehenden Ansprüche,
**dadurch gekennzeichnet, dass**
das Gehäuse (14a; 14b, 16b) ein Gehäuseelement aufweist, das zumindest im Bereich der zumindest einen Kontaktstelle (40a, 42a; 40b-50b) räumlich zwischen dem zumindest einen Anschlusselement (32a, 34a; 32b, 34b, 36b, 38b) und dem zumindest einen Kontaktelement (52a, 54a; 52b, 54b, 56b, 58b) angeordnet ist.

7. Energiespeichereinheit nach einem der vorhergehenden Ansprüche,
**gekennzeichnet, durch**
eine für das zumindest eine Anschlusselement (32a, 34a; 32b, 34b, 36b, 38b) vorgesehene Austrittsebene, auf die bezogen die zumindest eine Kontaktstelle (40a, 42a; 40b-50b) und ein Gehäuseelement des Gehäuses (14a; 14b, 16b) auf einer gleichen Seite angeordnet sind.

8. Energiespeichereinheit nach einem der vorhergehenden Ansprüche,
**dadurch gekennzeichnet, dass**
das zumindest eine Kontaktelement (52a, 54a; 52b, 54b, 56b, 58b) und das zumindest eine Anschlusselement (32a, 34a; 32b, 34b, 36b, 38b) zueinander zumindest im Wesentlichen entgegengesetzt orientierte Haupterstreckungsrichtungen aufweisen.

9. Akkuvorrichtung für eine Handwerkzeugmaschine mit zumindest zwei Energiespeichereinheiten (10a, 12a; 10b, 12b) nach einem der vorhergehenden Ansprüche.

10. Akkuvorrichtung nach Anspruch 9,
**gekennzeichnet durch**
zumindest zwei Leiterelemente (62a, 64a, 66a, 68a; 62b, 64b, 66b, 68b) zur elektrischen Verbindung mit einer Kontaktstelle (40a, 42a; 40b-50b) von zumindest einem Kontaktelement (52a, 54a; 52b, 54b, 56b, 58b) einer der Energiespeichereinheiten (10a, 12a; 10b, 12b).

11. Akkuvorrichtung nach Anspruch 10,
**dadurch gekennzeichnet, dass**
die zumindest zwei Leiterelemente (62a, 64a, 66a, 68a; 62b, 64b) jeweils genau einer der Energiespeichereinheiten (10a, 12a; 10b, 12b) zugeordnet und lediglich mit der Kontaktstelle (40a, 42a; 40b-50b) der zugeordneten Energiespeichereinheit (10a, 12a; 10b, 12b) elektrisch verbunden sind.

12. Akkuvorrichtung zumindest nach Anspruch 10,
**dadurch gekennzeichnet, dass**
zumindest eines der Leiterelemente (66b, 68b) die Energiespeichereinheiten (10b, 12b) elektrisch miteinander verbindet.

13. Akkuvorrichtung zumindest nach Anspruch 10,
**dadurch gekennzeichnet, dass**
Falze (22a, 28a; 22b, 28b) der zumindest zwei Energiespeichereinheiten (10a, 12a; 10b, 12b) zueinander parallele Falzkanten (70a; 70b, 72b) ausbilden, die parallel zu den zumindest zwei Leiterelementen (62a, 64a, 66a, 68a; 62b, 64b, 66b, 68b) angeordnet sind.

## Claims

1. Energy storage unit for a handheld power tool, comprising a housing (14a; 14b, 16b) which has a rebate (22a, 28a; 22b, 28b) on a housing base side (18a), comprising at least one connection element (32a, 34a; 32b, 34b, 36b, 38b) which is provided for guiding an' electrode potential out of the housing (14a; 14b, 16b) through the rebate (22a, 28a; 22b, 28b), comprising at least one contact point (40a, 42a; 40b-50b) for making electrical contact with the at least one connection element (32a, 34a; 32b, 34b, 36b, 38b), and comprising at least one contact element (52a, 54a; 52b, 54b, 56b, 58b) which is fixedly connected to the at least one connection element (32a, 34a; 32b, 34b, 36b, 38b) and forms the at least one contact point (40a, 42a; 40b-50b), wherein the contact element (52a, 54a; 52b, 54b, 56b, 58b) is arranged at least electrically between the connection element (32a, 34a; 32b, 34b, 36b, 38b) and the contact point (40a, 42a; 40b-50b), wherein the contact element (52a, 54a; 52b, 54b, 56b, 58b) forms a further contact point (86a, 88a; 86b, 88b, 116b, 118b) with the connection element (32a, 34a; 32b, 34b, 36b, 38b),
**characterized in that**
the contact point (40a, 42a; 40b-50b) is arranged at least partially on the rebate (22a, 28a; 22b, 28b), wherein the contact element (52a, 54a; 52b, 54b, 56b, 58b) and the connection element (32a, 34a; 32b, 34b, 36b, 38b) are cohesively connected to one another at the further contact point (86a, 88a; 86b, 88b, 116b, 118b).

2. Energy storage unit according to Claim 1,
**characterized in that**
the at least one contact point (40a, 42a; 40b-50b) is of flat design.

3. Energy storage unit according to Claim 1 or 2,
**characterized in that**
the at least one contact point (40a, 42a; 40b-50b) is in the form of a welding contact point.

4. Energy storage unit according to one of the preceding claims,
**characterized in that**
the at least one contact point (40a, 42a; 40b-50b) extends in a plane parallel to the housing base side (18a).

5. Energy storage unit according to one of the preceding claims,
**characterized in that**
the contact point (40a, 42a; 40b-50b) is arranged on a side of the rebate (22a, 28a; 22b, 28b) which is averted from the housing base side (18a).

6. Energy storage unit according to one of the preceding claims,
**characterized in that**
the housing (14a; 14b, 16b) has a housing element which is physically arranged between the at least one connection element (32a, 34a; 32b, 34b, 36b, 38b) and the at least one contact element (52a, 54a; 52b, 54b, 56b, 58b) at least in the region of the at least one contact point (40a, 42a; 40b-50b).

7. Energy storage unit according to one of the preceding claims,
**characterized by**
an outlet plane which is provided for the at least one connection element (32a, 34a; 32b, 34b, 36b, 38b) and with respect to which the at least one contact point (40a, 42a; 40b-50b) and a housing element of the housing (14a; 14b, 16b) are arranged on the same side.

8. Energy storage unit according to one of the preceding claims,
**characterized in that**
the at least one contact element (52a, 54a; 52b, 54b, 56b, 58b) and the at least one connection element (32a, 34a; 32b, 34b, 36b, 38b) have directions of main extent which are oriented at least substantially opposite to one another.

9. Rechargeable battery apparatus for a handheld power tool comprising at least two energy storage units (10a, 12a; 10b, 12b) according to one of the preceding claims.

10. Rechargeable battery apparatus according to Claim 9,
**characterized by**
at least two conductor elements (62a, 64a, 66a, 68a; 62b, 64b, 66b, 68b) for electrical connection to a contact point (40a, 42a; 40b-50b) of at least one contact element (52a, 54a; 52b, 54b, 56b, 58b) of one of the energy storage units (10a, 12a; 10b, 12b).

11. Rechargeable battery apparatus according to Claim 10,
**characterized in that**
the at least two conductor elements (62a, 64a, 66a, 68a; 62b, 64b) are each associated with precisely one of the energy storage units (10a, 12a; 10b, 12b) and are electrically connected only to the contact point (40a, 42a; 40b-50b) of the associated energy storage unit (10a, 12a; 10b, 12b).

12. Rechargeable battery apparatus at least according to Claim 10,
**characterized in that**
at least one of the conductor elements (66b, 68b) electrically connects the energy storage units (10b, 12b) to one another.

13. Rechargeable battery apparatus at least according to Claim 10,
**characterized in that**
rebates (22a, 28a; 22b, 28b) of the at least two energy storage units (10a, 12a; 10b, 12b) form rebate edges (70a; 70b, 72b) which are parallel to one another and which are arranged parallel to the at least two conductor elements (62a, 64a, 66a, 68a; 62b, 64b, 66b, 68b).

## Revendications

1. Bloc accumulateur d'énergie pour une machine-outil manuelle, comprenant un boîtier (14a ; 14b, 16b) qui possède une pliure (22a, 28a ; 22b, 28b) sur un côté de base de boîtier (18a), comprenant au moins un élément de raccordement (32a, 34a ; 32b, 34b, 36b, 38b) qui est conçu pour amener hors du boîtier (14a ; 14b, 16b) un potentiel d'électrode à travers la pliure (22a, 28a ; 22b, 28b), comprenant au moins un point de contact (40a, 42a ; 40b-50b) destiné à la mise en contact électrique de l'au moins un élément de raccordement (32a, 34a ; 32b, 34b, 36b, 38b) et comprenant au moins un élément de contact (52a, 54a ; 52b, 54b, 56b, 58b) relié à demeure à l'au moins un élément de raccordement (32a, 34a ; 32b, 34b, 36b, 38b), lequel forme l'au moins un point de contact (40a, 42a ; 40b-50b), l'élément de contact (52a, 54a ; 52b, 54b, 56b, 58b) étant disposé au moins électriquement entre l'élément de raccordement (32a, 34a ; 32b, 34b, 36b, 38b) et le point de contact (40a, 42a ; 40b-50b), l'élément de contact (52a, 54a ; 52b, 54b, 56b, 58b) formant avec l'élément de raccordement (32a, 34a ; 32b, 34b, 36b, 38b) un point de contact supplémentaire (86a, 88a ; 86b, 88b, 116b, 118b),
**caractérisé en ce que**
le point de contact (40a, 42a ; 40b-50b) est au moins partiellement disposé sur la pliure (22a, 28a ; 22b, 28b), l'élément de contact (52a, 54a ; 52b, 54b, 56b, 58b) et l'élément de raccordement (32a, 34a ; 32b, 34b, 36b, 38b) étant reliés ensemble par liaison de matières au niveau du point de contact supplémentaire (86a, 88a ; 86b, 88b, 116b, 118b).

2. Bloc accumulateur d'énergie selon la revendication 1, **caractérisé en ce que** l'au moins un point de contact (40a, 42a ; 40b-50b) est de configuration plane.

3. Bloc accumulateur d'énergie selon la revendication 1 ou 2, **caractérisé en ce que** l'au moins un point de contact (40a, 42a ; 40b-50b) est réalisé sous la forme d'un point de contact par soudage.

4. Bloc accumulateur d'énergie selon l'une des revendications précédentes, **caractérisé en ce que** l'au moins un point de contact (40a, 42a ; 40b-50b) s'étend dans un plan parallèle au côté de base de boîtier (18a).

5. Bloc accumulateur d'énergie selon l'une des revendications précédentes, **caractérisé en ce que** le point de contact (40a, 42a ; 40b-50b) est disposé sur un côté de la pliure (22a, 28a ; 22b, 28b) qui est orienté à l'opposé du côté de base de boîtier (18a).

6. Bloc accumulateur d'énergie selon l'une des revendications précédentes, **caractérisé en ce que** le boîtier (14a ; 14b, 16b) possède un élément de boîtier qui, au moins dans la zone de l'au moins un point de contact (40a, 42a ; 40b-50b), est disposé dans l'espace entre l'au moins un élément de raccordement (32a, 34a ; 32b, 34b, 36b, 38b) et l'au moins un élément de contact (52a, 54a ; 52b, 54b, 56b, 58b).

7. Bloc accumulateur d'énergie selon l'une des revendications précédentes, **caractérisé par** un plan de sortie pour l'au moins un élément de raccordement (32a, 34a ; 32b, 34b, 36b, 38b), en référence auquel l'au moins un point de contact (40a, 42a ; 40b-50b) et un élément de boîtier du boîtier (14a ; 14b, 16b) sont disposés sur un même côté.

8. Bloc accumulateur d'énergie selon l'une des revendications précédentes, **caractérisé en ce que** l'au moins un élément de contact (52a, 54a ; 52b, 54b, 56b, 58b) et l'au moins un élément de raccordement (32a, 34a ; 32b, 34b, 36b, 38b) présentent des directions d'extension principales orientées au moins sensiblement à l'opposé l'une de l'autre.

9. Dispositif accumulateur pour une machine-outil manuelle comprenant au moins deux blocs accumulateurs d'énergie (10a, 12a ; 10b, 12b) selon l'une des revendications précédentes.

10. Dispositif accumulateur selon la revendication 9, **caractérisé par** au moins deux éléments conducteurs (62a, 64a, 66a, 68a ; 62b, 64b, 66b, 68b) destinés à une liaison électrique avec un point de contact (40a, 42a ; 40b-50b) d'au moins un élément de contact (52a, 54a ; 52b, 54b, 56b, 58b) de l'un des blocs accumulateurs d'énergie (10a, 12a ; 10b, 12b).

11. Dispositif accumulateur selon la revendication 10, **caractérisé en ce que** les au moins deux éléments conducteurs (62a, 64a, 66a, 68a ; 62b, 64b) sont respectivement associés à exactement l'un des blocs accumulateurs d'énergie (10a, 12a ; 10b, 12b) et sont uniquement reliés au point de contact (40a, 42a ; 40b-50b) du bloc accumulateur d'énergie (10a, 12a ; 10b, 12b) associé.

12. Dispositif accumulateur au moins selon la revendication 10, **caractérisé en ce qu'**au moins l'un des éléments conducteurs (66b, 68b) relie électriquement les blocs accumulateurs d'énergie (10b, 12b) ensemble.

13. Dispositif accumulateur au moins selon la revendication 10, **caractérisé en ce que** les pliures (22a, 28a ; 22b, 28b) des au moins deux blocs accumulateurs d'énergie (10a, 12a ; 10b, 12b) forment des bords de pliure (70a ; 70b, 72b) parallèles l'un à l'autre qui sont disposés parallèlement aux au moins deux éléments conducteurs (62a, 64a, 66a, 68a ; 62b, 64b, 66b, 68b).
